# EUROPÄISCHE PATENTSCHRIFT

(11) **EP 0 715 970 B1**
(45) Veröffentlichungstag und Bekanntmachung des Hinweises auf die Patenterteilung: **07.11.2001**
(21) Anmeldenummer: 95890213.2
(22) Anmeldetag: 05.12.1995
(51) Int. Cl.: B44C 5/04, B44C 1/18, B60R 13/02

(54) **Kaschierverfahren zur Herstellung dekorativer Oberflächen**
Coating process for making decorative surfaces
Procédé de revêtement pour fabriquer des surfaces décoratives

(30) Priorität: 05.12.1994 AT 225794
(43) Veröffentlichungstag der Anmeldung: 12.06.1996
(73) Patentinhaber: Magna Eybl Ges.m.b.H., 2435 Ebergassing (AT)
(72) Erfinder: Steiner, Karl, A-2435 Ebergassing (AT); Hahnekamp, Richard, A-7000 Eisenstadt (AT)
(74) Vertreter: Kovac, Werner, Dipl.-Ing.

(56) Entgegenhaltungen:
- DE-A- 2 615 793
- US-A- 3 713 936
- US-A- 4 445 954
- US-A- 4 581 272
- US-A- 4 721 642

## Beschreibung

Die Erfindung betrifft ein Kaschierverfahren zur Herstellung von Formteilen mit einer dekorativen Oberfläche, insbesondere für Fahrzeuginnenräume, durch Verkleben eines Formkörpers mit einem Dekor, wobei ein Formkörper mit einer freien Vliesoberfläche im Kaschierbereich mittels eines Direktverfahrens zum Beispiel mittels Hinterpressen, Hinterspritzen, Preßformen od. dgl. hergestellt wird, wobei als Kunststoff für das Direktverfahren ein thermoplastisch verarbeitbarer Spritzgußwerkstoff insbesondere Polypropylen verwendet wird und wobei ein Kleber auf die Vliesoberfläche des Vliesformkörpers aufgebracht wird.

Bei der Technik des Kaschierens handelt es sich um ein Verfahren, bei dem auf ein Formteil, meist aus Kunststoff, zur Erhöhung dessen dekorativen Erscheinungsbildes ein Deckmaterial, beispielsweise Leder, Velours, Stoff usw., aufgebracht wird. Bei bekannten Kaschierverfahren wird der Kleber auf die Kunststoffseite des Formkörpers aufgebracht und das Dekor angepreßt. Trotz eines möglichst gleichmäßigen Auftragens des Klebers kann es in Problembereichen wie Kanten, Sicken etc. zu unerwünschten Ablöseerscheinungen des Dekors vom Formkörper kommen, insbesondere dann, wenn die dekorierte Oberfläche hoher klimabedingter Beanspruchung ausgesetzt ist, wie dies besonders in Fahrzeuginnenräumen der Fall ist.

Einige Kunststoffe wie z.B. ABS (Acrylonitrile-Butadiene-Styrene) oder ABS-PC (Acrylonitrile-Butadiene-Styrene Polycarbonat) können direkt verklebt werden. Andere Kunststoffe müssen vorbehandelt werden. So wird beispielsweise die Oberfläche des Formkörpers von organischen Lösungsmitteln angelöst oder aufgerauht, was in der Folge eine bessere Haftung des Dekors bewirkt, aber einen zusätzlichen Arbeitsschritt bedingt. Bei geometrisch anspruchsvoll geformten Teilen kommt es aber immer wieder zu Ablösungen. Polypropylen konnte bisher wegen seiner Oberflächeneigenschaften und der damit verbundenen hohen Ablösegefahr des Dekors zum Kaschieren unbehandelt nicht herangezogen werden, obwohl dieser Werkstoff aus ökologischen und ökonomischen Überlegungen besonders interessant wäre, da es umweltverträglich und kostengünstig herstellbar ist.

Die US-A 4 721 642 beschreibt einen Formteil mit dekorativer Oberfläche, der einen durch ein Direktverfahren hergestellten Formkörper mit einer freien Vliesoberfläche aufweist, auf welche eine Kleberschicht aufgebracht wird. Auf diese Kleberschicht wird ein Flor aus einer Vielzahl von gefärbten Polyamidfasern so aufgebracht, daß die einen Enden der Fasern in der Kleberschicht haften. Auf das Flor wird abschließend eine Deckschicht aus geschäumten Polyurethanharz aufgebracht.

Die US-A 3 713 936 beschreibt einen Formteil mit einer thermoplastischen Unterschicht, einer Innenschicht aus einer oder mehreren Matten aus Watte und einer Gewebeschicht. Dabei wird die aus Watte bestehende Innenschicht durch Kleben mit der Gewebeschicht verbunden. Danach wird auf die andere Seite der Watteschicht ein niedrigschmelzendes thermoplastisches Material aufgetragen, der Rohformteil wird erhitzt und in eine Form gelegt, wobei durch Schmelzen und Erstarren des thermoplastischen Materials der Formteil seine entsprechende Gestalt annimmt.

Aus der US-A 4 581 272 ist ein Formteil für eine Fahrzeugtür mit einer äußeren textilen Gewebeschicht bekannt, welche Faserschlaufen aufweist, deren Enden in eine Substratschicht mit thermoplastischen Fasern eingebettet sind. Die Gewebeschicht ist mit der Substratschicht durch Aufschmelzen der thermoplastischen Fasern unter Druck- und Wärmeeinwirkung verschmolzen.

Ferner wird in der US-A 4 445 954 ein Herstellungsverfahren für gepolsterte dekorative Verkleidungen für Fahrzeuginnenräume mit einer dekorativen Gewebeoberfläche und einer Auspolsterung aus Polymer-Schaum beschrieben. Die Verkleidung weist eine erste und eine zweite Trägerschicht aus thermoplastischen Fasern auf, welche beidseits eines Kernes aus nicht verwobenen synthetischen Fasern angeordnet und mit diesem vernäht sind. Weiters weist die Verkleidung eine Zwischenschicht aus thermoplastischem Polymer-Schaum und eine äußere Oberflächenschicht aus einem dekorativen, gepolstertem Material auf. Die Zwischenschicht und die Oberflächenschicht werden aufeinandergelegt, miteinander verbunden und in eine beheizbare Form gelegt. Die beiden Trägerschichten und der Kern werden sodann erhitzt, um die thermoplastischen Fasern aufzuschmelzen und danach in die Form auf die Polymer-Schaum-Zwischenschicht gelegt. Die gesamte Anordnung wird in der Form erhitzt und gepreßt, wodurch die Oberflächenschicht mit der Grundschicht verbunden wird. Nach Abkühlung der Verkleidung weist diese die entsprechende Form auf.

Aufgabe der Erfindung ist es, diese Nachteile zu vermeiden und ein einfaches Kaschierverfahren zu entwickeln, bei dem auch bei hoher klimabedingter, Beanspruchung eine feste Haftung des Dekors am Untergrund gewährleistet ist.

Erfindungsgemäß wird dies dadurch erreicht, daß das Dekor auf das Vlies aufgepreßt wird, wobei als Material für das Dekor Leder, Wollveloursstoffe oder Flachgewebe verwendet wird.

Es wird somit zuerst ein Formkörper mit einer festgebundenen Vliesoberfläche durch eines der bekannten Direktverfahren zur Herstellung von Kunststoff-Formteilen hergestellt und schließlich in einem weiteren Herstellungsschritt, in dem das Dekor auf die Vliesoberfläche des Vliesformkörpers aufgepreßt wird, verarbeitet. Der Kleber kann sich mit der großen und groben Oberfläche des Vlieses hervorragend verbinden, sodaß ein deutlich verbesserter Zusammenhalt zwischen dem Formkörper und dem Dekor ermöglicht wird. Aus technischer wie kaufmännischer Sicht ist es beim erfindungsgemäßen Verfahren besonders vorteilhaft, daß die Herstellung sowohl dekorierter als auch undekorierter, d.h. nachträglich zu kaschierender Formteile im selben Werkzeug möglich ist. Dies bringt neben Kostenersparnis durch Entfall einen zusätzlichen Werkzeuges eine Erhöhung der Produktionsflexibilität. Formteile mit verschiedensten dekorativen Oberflächen können somit in einem Werkzeug hergestellt werden.

Prinzipiell kann als Kunststoff für das Direktverfahren jeder thermoplastisch verarbeitbare Spritzgußwerkstoff, wie beispielsweise ABS oder ABS-PC verwendet werden. Die Haftung des Klebers und damit des Dekors am Vlies ist gemäß dem erfindungsgemäßen Verfahren allerdings so hoch, daß sogar Polypropylen herangezogen werden kann. Somit ist die Kaschierung äußerst kostengünstig herzustellen und erlaubt eine umweltverträgliche Produktion. Durch den Polypropylenanteil ist auch wie bei allen anderen thermoplastischen Kunststoffen das Recyclieren von Altprodukten unproblematisch.

Als Kleber beim erfindungsgemäßen Verfahren können alle gängigen Klebesysteme wie Hot-Melt-, dispersionslösungsmittelhältige Kleber oder Zweikomponentenkleber verwendet werden. Prinzipiell ist jede Art von Dekor verwendbar, beste Ergebnisse können sogar bei Leder, Wollveloursstoffen oder Flachgeweben erzielt werden.

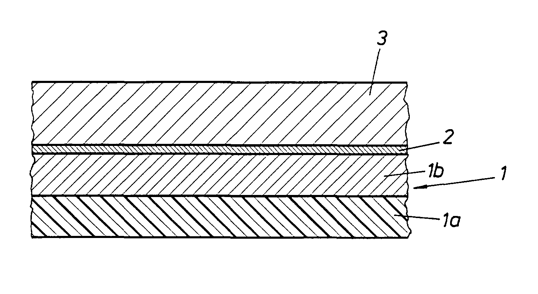

Wie in der Figur dargestellt, besteht der Vliesformkörper 1 aus dem Kunststofformkörper 1a, welcher mit dem Vlies 1b fest verbunden ist. Über die Kleberschicht 2 wird das Dekor 3 fest mit dem Vliesformkörper 1 verbunden. Als Vlies finden sowohl natürliche als auch künstliche Gewebe mit einem Gewicht vorzugsweise von 100 bis 250 g/m² Verwendung.

## Patentansprüche

1. Kaschierverfahren zur Herstellung von Formteilen mit einer dekorativen Oberfläche, insbesondere für Fahrzeuginnenräume, durch Verkleben eines Formkörpers mit einem Dekor, wobei ein Formkörper mit einer freien Vliesoberfläche im Kaschierbereich mittels eines Direktverfahrens zum Beispiel mittels Hinterpressen, Hinterspritzen, Preßformen od. dgl. hergestellt wird, wobei als Kunststoff für das Direktverfahren ein thermoplastisch verarbeitbarer Spritzgußwerkstoff insbesondere Polypropylen verwendet wird und wobei ein Kleber auf die Vliesoberfläche des Vliesformkörpers aufgebracht wird, **dadurch gekennzeichnet, daß** das Dekor auf das Vlies aufgepreßt wird, wobei als Material für das Dekor (3) Leder, Wollvelourstoffe oder Flachgewebe verwendet wird.

## Claims

1. A lining process for producing formed parts with a decorative surface, especially for vehicle interiors, by gluing a formed member to a decoration, wherein a formed member with a free non-woven fabric surface is produced in the lined region by means of a direct process such as back pressing, back injection moulding, press forming or the like, wherein the plastic material used for the direct process is a thermoplastically processable injection material, especially polypropylene, and wherein an adhesive is applied to the non-woven fabric surface of the formed non-woven fabric member,
**characterised in**
**that** the decoration is pressed on to the non-woven fabric and that the material for the decoration (3) is leather, wool velour materials or a flat woven fabric.

## Revendications

1. Procédé de laminage pour la fabrication de préformés présentant une face supérieure décorative, en particulier pour les intérieurs de véhicules automobiles, par collage d'un corps conformé avec un décor, dans lequel on fabrique un corps conformé présentant une face supérieure libre non-tissée dans la zone de laminage, au moyen d'un procédé direct, par exemple au moyen d'un contre-pressage, d'un contre-moulage par injection, d'un moulage à pression ou analogue, où on utilise comme matériau pour le procédé direct une matière d'injection thermoplastique façonnable, en particulier du polypropylène, et où une colle est déposée sur la face supérieure non-tissée du corps conformé non-tissé, **caractérisé en ce que** le décor est engagé par pression sur le non-tissé, le matériau utilisé pour le décor (3) étant du cuir, du drap de velours de laine ou du tissu plat.
